# EUROPEAN PATENT APPLICATION

(11) **EP 2 472 223 A1**
(43) Date of publication of application: **04.07.2012**
(21) Application number: 10820471.0
(22) Date of filing: 27.09.2010
(51) Int. Cl.: G01C 21/00, G08G 1/09, G08G 1/16, G09B 29/00, G09B 29/10

(54) **NAVIGATION DEVICE**

(30) Priority: 30.09.2009 JP 2009226815
(71) Applicant: Sanyo Electric Co., Ltd., Osaka 570-8677 (JP); Sanyo Consumer Electronics Co., Ltd., Tottori-shi Tottori 680-8634 (JP)
(72) Inventor: IMANAGA Akira, Tottori-Shi Tottori 680-8634 (JP); HIROSE Naoki, Tottori-Shi Tottori 680-8634 (JP)
(74) Representative: Merkau, Bernhard
(86) International application number: PCT/JP2010/066659
(87) International publication number: WO 2011/040356

(57) **Abstract**

Disclosed is a navigation device provided with a radio communication unit, a GPS unit, a positional information acquisition unit, a display unit, and a voice output unit, further provided with a warning operation unit for performing a warming operation, further provided with a recording unit for recording map information, further provided with a warning history generation unit for acquiring point information indicating a point at which the warning operation is detected, and generating warning history information in which the contents of the warning operation and the point information are associated with each other, further provided with a point detection unit for determining, using the positional information acquisition unit and the map information, whether or not the current position is within a predetermined range from an intersection and within a predetermined range from a position indicated by the point information, and further provided with a notification unit for, when the current position is determined to be within the abovementioned ranges, generating information for notification from the warning history information including said point information, and performing output control.

## Description

### Technical Field

The present invention relates to a navigation device that performs a route guide for a passenger of a moving body, in particular, to a navigation device that performs a notification for the passenger near a point where a warning was released in the past.

### Background Art

In recent years, a between-road-and-vehicle communication system is in practical use, which provides various kinds of service by performing communication between a road-side apparatus installed on a road and a vehicle apparatus mounted on a vehicle. Especially, a system is under development, which uses various kinds of information between pedestrians, vehicles, and road-side apparatuses by utilizing an information communication technology called an ITS (Intelligent Transport System).

The ITS has the purpose of increasing chiefly safety, transport efficiency, and comfortableness. Specifically, for example, an electronic toll collection system, drive supporting, traffic management optimization, efficient road management, travel supporting of an emergency vehicle and the like are under consideration. As a typical system, an ETC (Electronic Toll Collection) for an express way and the like are in practical use.

Besides, an experimental guideline on a drive supporting communication system issued from the ITS Forum in Japan shows the following five systems as systems that use a radio wave on the order of 700 MHz.
1. System that prevents a pedestrian hitting accident at a turning-left time.
2. System that prevents a collision with an straightly oncoming vehicle at a turning-right time.
3. System that prevents a sudden collision at an intersection.
4. System that prevents a vehicle from colliding with a vehicle parking in front of a curve.
5. Emergency-vehicle information providing system that performs a notification about an approach of an emergency vehicle.

In a navigation device that releases a warning about these dangers by using between-vehicles communication and between-road-and-vehicle communication, a point where a warning is released is recorded as a point where a driver actually encountered a dangerous situation. For example, the date and time, the point, the latitude and longitude, the traveling direction, the warning content and the like are recorded into a memory of the navigation device.

In connection with the above system, a patent document 1 discloses an accident prevention apparatus that detects self-presence at a specific point and effectively makes other moving bodies near the point recognize the presence. This accident prevention apparatus records a point where accidents frequently happen and a point which has a bad visibility. And, in a case where the recorded point and a current position are in a predetermined area, the accident prevention apparatus performs a notification about the self-presence to outside of the vehicle by means of an outboard notification means.

As described above, by performing a notification about the self-presence at the point where accidents frequently happen and at the point which has the bad visibility, the other moving bodies near the points are made to recognize the self-presence and the likelihood of preventing an accident is increased.

### Citation List

### Patent Literature

Patent document 1: JP-A-2005-62060

### Summary of Invention

### Technical Problem

However, the patent document 1 uses the point of many accidents happening which is registered in a data base in advance, so that the place where the warning is released is the same. Besides, it is necessary to always collect information about accident occurrence and perform management and update by means of a data base and like.

Besides, in a case where the own-vehicle approaches the point of many accidents happening, a warning is uncoditionally released, so that there are problems that warnings frequently occur, an unnecessary warning unsuitable for the drive situation occurs, and there is a likelihood that the driving is discouraged.

The present invention has been made in light of the above problems, and it is an object of the present invention to provide a navigation device that is able to record and release accident information and warning information by using an ITS; and perform a high-necessity notification only in accordance with the drive situation of the own-vehicle and a surrounding situation.

### Solution to Problem

To achieve the above object, a navigation device according to the present invention includes:
a wireless communication portion that performs wireless communication by using an antenna;
a GPS device that performs communication with a GPS (Global Positioning System) satellite;
a position information acquisition portion that acquires position information by using the GPS device;
a display portion or a voice output portion;
a warning operation portion that performs a warning operation by means of the display portion or the voice output portion based on information obtained from between-vehicles communication or between-road-and-vehicle communication by the wireless communication portion; and
a record portion that records map information;
   the navigation device comprising:
a warning history generation portion that in a case where the warning operation is performed by the warning operation portion, obtains, from the position information acquisition portion, point information indicating a point where the warning operation is performed, generates warning history information which relates content of the warning operation and the point information to each other, and records the warning history information into the record portion;
a point detection portion that determines whether or not a position indicated by the position information obtained from the position information acquisition portion is in a predetermined area from an intersection indicated by the map information, and determines whether or not the position indicated by the position information is in a predetermined area from a position indicated by the point information which is included in the warning history information; and
a notification portion that in a case where it is determined by the point detection portion that the position indicated by the position information is in the predetermined area, generates notification information that indicates content of the warning history information which includes the point information, and based on the notification information, controls the display portion or the voice output portion to perform a notification operation.

According to this structure, the navigation device according to the present invention includes the wireless communication portion, the GPS device, and the position information acquisition portion that acquires position information by using the GPS device. Besides, the navigation system includes the display portion or the voice output portion. Besides, the navigation system includes the warning operation portion that performs a warning operation by means of the display portion or the voice output portion based on information obtained from between-vehicles communication or between-road-and-vehicle communication. Besides, the navigation system includes the record portion that records map information. Besides, the navigation system includes the warning history generation portion that in a case where the warning operation by the warning operation portion is detected, obtains the point information that indicates the point where the warning operation is detected, generates the warning history information which relates the content of the warning operation and the point information to each other, and records the warning history information into the record portion. Besides, the navigation system includes the point detection portion that uses the position information acquisition portion and the map information to determine whether or not a current position is in the predetermined area from the intersection, and to determine whether or not the position indicated by the position information is in the predetermined area from the position indicated by the point information, that is, the position where the warning operation was performed in the past. Besides, the navigation device includes the notification portion that in the case where it is determined by the point detection portion that the position indicated by the position information is in the predetermined area, generates the notification information from the warning history information which includes the point information, and controls the display portion or the voice output portion to perform the notification operation. According to this, in a case where a vehicle approaches the point where the warning operation was performed in the past, it is possible to perform the notification for a passenger of the own-vehicle.

Besides, to achieve the above object, in the navigation device according to the present invention,
in a case where the warning operation is performed by the warning operation portion, the warning history generation portion includes situation information, which indicates a traveling situation of a vehicle on which the navigation device is mounted, into the warning history information and records the situation information into the record portion;
the point detection portion determines whether or not the position indicated by the position information acquired by the position information acquisition portion is in a predetermined area from the intersection indicated by the map information and from the position indicated by the point information which is included in the warning history information, and determines whether or not the traveling situation of the vehicle agrees with the traveling situation indicated by the situation information; and
in a case where it is determined by the point detection portion that the position indicated by the position information acquired by the position information acquisition portion is in the predetermined area and the traveling situations agree with each other, the notification portion generates the notification information which indicates the content of the warning history information which includes the situation information, and based on the notification information, controls the display portion or the voice output portion to perform the notification operation.

According to this structure, in the case where the warning operation by the warning operation portion is detected, the warning history generation portion includes the situation information, which indicates the traveling situation of the own-vehicle, into the warning history information and records the situation information into the record portion. Besides, the point detection portion determines whether or not the current position is in the predetermined area from the intersection and in the predetermined area from the position indicated by the position information, that is, the position where the warning operation was performed in the past, and determines whether or not the traveling situation of the vehicle agrees with the traveling situation indicated by the situation information, that is, the situation where the warning operation was performed in the past. Besides, in the case where it is determined by the point detection portion that each of the above conditions is met, the notification portion generates the notification information from the warning history information which includes the point information, and controls the display portion or the voice output portion to perform the notification operation. According to this, in a case only where a vehicle approaches the point where the warning operation was performed in the past and the traveling situations are the same, it is possible to perform the notification for the passenger of the own-vehicle.

Besides, to achieve the above object, the navigation device according to the present invention includes a speed detection portion or an angle detection portion, wherein
in the case where the warning operation is performed by the warning operation portion, the warning history generation portion detects, from the speed detection portion, a traveling speed of the vehicle on which the navigation device is mounted, or detects, from the angle detection portion, a traveling direction of the vehicle, and generates the situation information based on the detected traveling speed or the detected traveling direction;
the point detection portion uses the speed detection portion or the angle detection portion to compare the raveling speed or the traveling direction of the vehicle with the traveling speed or the traveling direction indicated by the situation information, and determines whether or not a comparison result meets a predetermined condition; and
in a case where it is determined by the point detection portion that the position indicated by the position information acquired by the position information acquisition portion is in the predetermined area and the comparison result meets the predetermined condition, the notification portion generates the notification information which indicates the content of the warning history information which includes the situation information, and based on the notification information, controls the display portion or the voice output portion to perform the notification operation.

According to this structure, the navigation device according to the present invention includes the speed detection portion or the angle detection potion. In the case where the warning operation by the warning operation portion is detected, the warning history generation portion detects the traveling speed of the own-vehicle from the speed detection portion, or detects the traveling direction of the own-vehicle from the angle detection portion. And, the warning history generation portion generates the situation information based on the detected traveling speed or the detected traveling direction. Besides, the point detection portion uses the speed detection portion or the angle detection portion to compare the raveling speed or the traveling direction of the own-vehicle with the traveling speed or the traveling direction indicated by the situation information, and determines whether or not the comparison result meets the predetermined condition, for example, an approximate value. Besides, in the case where it is determined the comparison result meets the predetermined condition, the notification portion generates the notification information from the warning history information which includes the corresponding point information, and controls the display portion or the voice output portion to perform the notification operation. According to this, According to this, in a case only where a vehicle approaches the point where the warning operation was performed in the past and the traveling speeds are the same or the traveling directions are the same, it is possible to perform the notification for the passenger of the own-vehicle.

Besides, to achieve the above object, in the navigation device according to the present invention,
in the case where the warning operation is performed by the warning operation portion, the warning history generation portion uses an ITS (Intelligent Transportation System) to detect the number or types of peripheral vehicles of the vehicle on which the navigation device is mounted, and based on the detected number or types, generates the situation information;
the point detection portion uses the ITS to compare the number or types of peripheral vehicles of the vehicle with the number or types of peripheral vehicles indicated by the situation information, and determines whether or not a comparison result meets a predetermined condition;
in a case where it is determined by the point detection portion that the position indicated by the position information acquired by the position information acquisition portion is in the predetermined area and the comparison result meets the predetermined condition, the notification portion generates the notification information which indicates the content of the warning history information which includes the situation information, and based on the notification information, controls the display portion or the voice output portion to perform the notification operation.

According to this structure, in the case where the warning operation by the warning operation portion is detected, the warning history generation portion uses the ITS to detect the number or types of peripheral vehicles of the own-vehicle. And, the warning history generation portion generates the situation information based on the detected number or types. Besides, the point detection portion uses the ITS to compare the number or types of peripheral vehicles of the own-vehicle with the number or types of peripheral vehicles indicated by the situation information, and determines whether or not the comparison result meets the predetermined condition. Besides, in the case where it is determined that the comparison result meets the predetermined condition, the notification portion generates the notification information from the warning history information which includes the corresponding point information, and controls the display portion and the voice output portion to perform the notification operation. According to this, in a case only where a vehicle approaches the point where the warning operation was performed in the past and the traveling situations of peripheral vehicles of the own-vehicle are the same, it is possible to perform the notification for the passenger of the own-vehicle.

Besides, to achieve the above object, in the navigation device according to the present invention, the warning operation portion uses the ITS to perform the between-vehicles communication or the between-road-and-vehicle communication, thereby performing the warning operation; and
the warning history generation portion generates the warning history information by relating the point information acquired by the position information acquisition portion to information which indicates the content of the warning operation that is performed by using the ITS.

According to this structure, the warning operation portion uses the ITS to perform the between-vehicles communication or the between-road-and-vehicle communication, thereby performing the warning operation based on the obtained information. Besides, the warning history generation portion generates the warning history information by relating the point information acquired by the position information acquisition portion to the information which indicates the content of the warning operation that is performed by using the ITS.

### Advantageous Effects of Invention

According to the present invention, a point (hereinafter, called a dangerous point), where an accident happened or a warning about a danger was performed, is recorded into the record portion; in a case where the own-vehicle approaches the dangerous point again, the own-vehicle is notified of the dangerous point. According to this, it is possible to transmit the experienced information which a driver encountered in the past to the driver in accordance with a traveling route.

Besides, according to the present invention, in a case where the driver is a driver different from the driver at the time the accident happened, that is, a case where a family member, a rental car user or the like is driving, it is possible to share information about warnings and dangers which other drivers encountered in the past. According to this, it is possible to reduce a likelihood of an accident happening. Besides, it is unnecessary to manually collect, record and manage the information about the past warning and accident, so that it is advantageous in terms of the use.

Besides, according to the present invention, when the own-vehicle approaches the registered dangerous point, the notification is not always performed, but performed in a case only where the predetermined condition is met. In other words, in a case only where the situation is similar to the situation where the previous warning was performed, for example, the entrance angle to an intersection, the entrance speed, the presence of other vehicles and the like are similar to the situation where the previous warning was performed, the notification is performed. According to this, it is possible to avoid occurrence of a notification that is unsuitable for the situation and has a low necessity.

### Brief Description of Drawings

[Fig. 1] is a block diagram showing a device structure of a navigation device according to the present invention.
[Fig. 2] is a block diagram showing a system structure of a between-vehicles communication system that includes a navigation device according to the present invention.
[Fig. 3] is a table showing a data structure of between-vehicles communication information.
[Fig. 4] is a flow chart showing a notification procedure according to a first embodiment of the present invention.
[Fig. 5] is a schematic view showing schematically a road situation.
[Fig. 6] is a flow chart showing a notification procedure according to a second embodiment of the present invention.

### Description of Embodiments

Hereinafter, embodiments of the present invention are described with reference to the drawings. In the meantime, the embodiments described here are examples and the present invention is not limited to the embodiments described here,

### <1-1. Structure of between-vehicles communication system>

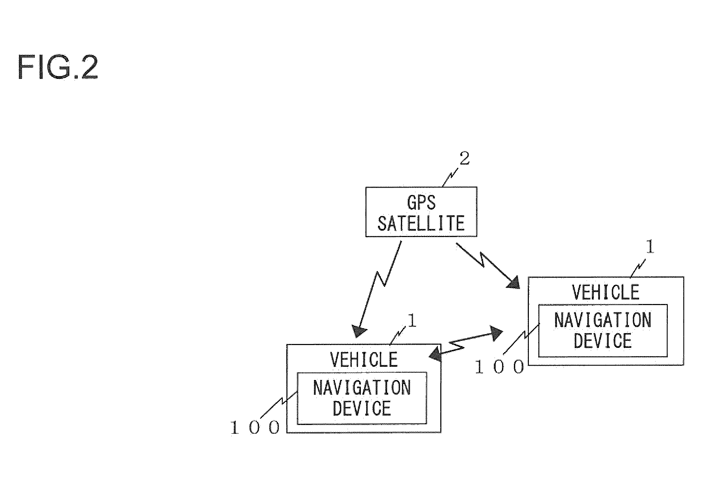

Fig. 2 is a block diagram showing a structure of a between-vehicles communication system that is achieved by a navigation device according to a first embodiment of the present invention. The present system is structured to include at least a vehicle 1, and a GPS (Global Positioning System) satellite 2.

The vehicle 1 is a vehicle on which a navigation device 100 described later is mounted and is able to mutually perform between-vehicles communication.

The GPS satellite 2 is disposed on a satellite orbit and transmits a specific radio wave (e.g., an L1 radio wave of 1.575 GHz and the like) to a GPS receiver on earth. According to this, various kinds of information for calculation of position information, for example, coordinates information of the GPS satellite 2, time information for measurement of a traveling time of a radio wave and the like are transmitted.

### <1-2. Structure of navigation device>

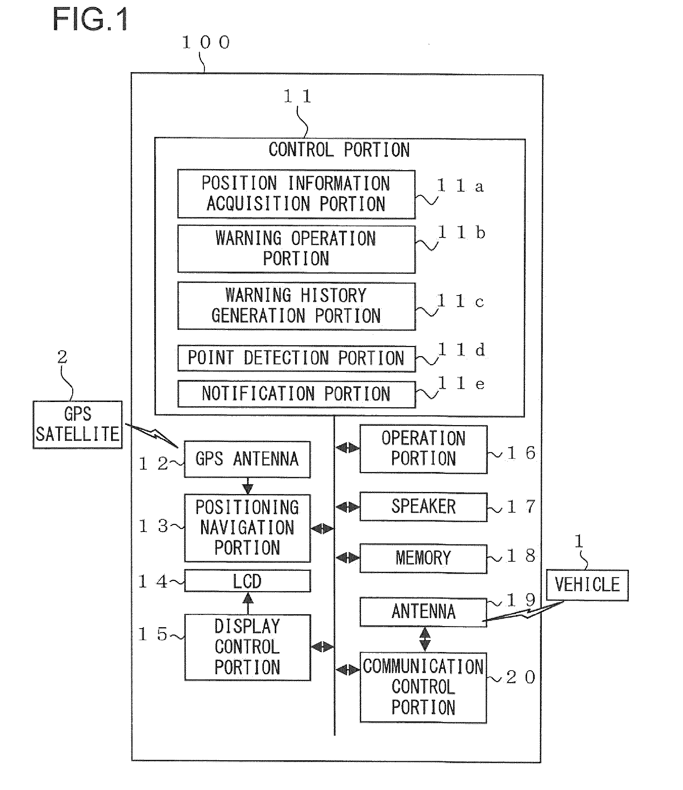

Fig. 1 is a block diagram showing an internal structure of the navigation device 100 according to the first embodiment of the present invention. Here, the navigation device 100 according to the present embodiment is an electronic device that is mounted on the vehicle 1 and constitutes a portion of the between-vehicles communication system.

As shown in the block diagram of Fig. 1, the navigation device 100 according to the present invention is structured to include at least: a control portion 11; a GPS antenna 12 (= a GPS device); a positioning navigation device 13 (= a GPS device); an LCD (Liquid Crystal Display) 14 (= a display portion); a display control portion 15; an operation portion 16; a speaker 17 (= a voice output portion); a memory 18 (= a record portion); an antenna 19 (= a wireless communication portion); and a communication control portion 20 (= a wireless communication portion).

The control portion 11 organically controls driving of each member of the navigation device 100 to perform comprehensive control of an acquisition process of traffic information, a display process and the like of traffic information. Besides, the control portion 11 includes position information acquisition portion 11a to a notification portion 11e as function portions that are achieved by executing a predetermined program on an operation device included in the control portion 11. Here, details of processes performed by the respective function portions are described later.

The GPS antenna 12 is a receiver that receives a specific radio wave (e.g., the L1 radio wave of 1.575 GHz and the like) transmitted from the GPS satellite. The GPS antenna 12 is able to receive, from a plurality of the GPS satellites 2, a signal that includes the coordinates information of each GPS satellite 2 and the like.

The positioning navigation device 13 is a device that includes: a positioning device that decodes the signal received by the GPS antenna to generate latitude and longitude information; and a navigating device that generates speed information and attitude information by means of a gyroscope (= an angle detection portion) and a vehicle speed sensor (= a speed detection portion).

The LCD 14 is a device that displays various kinds of information held by the navigation device 100, for example, traffic information, a menu screen and the like. The display control portion 15 encodes image information into a signal that is suitable for a signal format of the LCD 14; thereafter, performs D/A conversion, and outputs an image signal. The image signal output from the display control portion 15 is transmitted to the LCD 14 and displayed as an image.

The operation portion 16 is an input interface on which the driver of the vehicle 1 performs input of various kinds of commands for the navigation device 100, for example, a destination point input and the like. The operation portion 16 is structured to include, for example, a plurality of push buttons, touch sensors and the like. Or, a structure maybe employed, in which a touch panel is disposed on a surface of the LCD 14 to accept the operation inputs.

The speaker 17 is a voice output device that outputs a voice including various kinds of information to a passenger of the vehicle 1. In the present embodiment, especially, the speaker is used to output a notification voice in a case where the vehicle 1 approaches a dangerous point.

The memory 18 is a medium that records various kinds of information. The memory 18 is used to record, for example, map information and voice information that are used for the navigation process. Besides, in the present embodiment, the memory 18 is used to record between-vehicles communication information received from other vehicles, point information indicating a point where a warning operation was performed in the past and the like.

The antenna 19 performs reception and transmission of a radio wave with the other vehicle 1, and for example, a plurality of diversity antennas and the like are used. The communication control portion 20 performs demodulation of the radio wave received by the antenna 19. Here, the communication control portion 20 has a function as well for transmitting and receiving the radio wave by using the antenna 19.

### <1-3. Between-vehicles communication information>

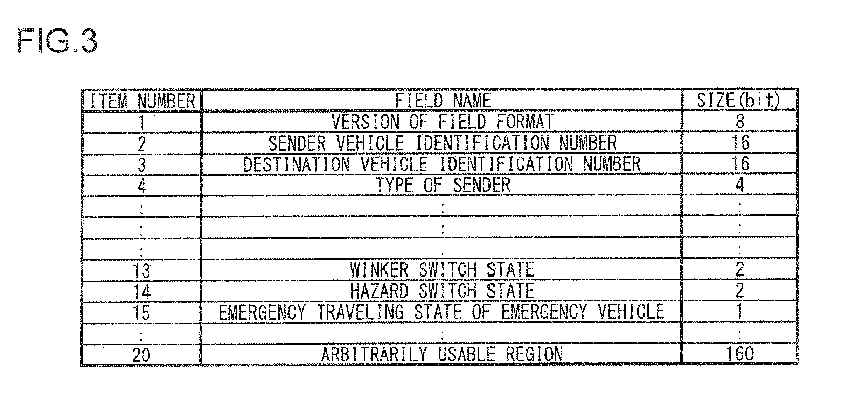

Fig. 3 shows a portion of a data structure of between-vehicles communication information that is included in the guideline on a drive supporting communication system issued from the ITS Forum in Japan. This guide line shows a between-vehicles communication system that uses a radio wave on the order of 700 MHz.

This between-vehicles communication information is broadcast-transmitted from the navigation device 100 to its peripheral vehicles and road-side devices at every 100 milliseconds. The traveling distance is several hundred meters. An item number 4 shows a current position of the own-vehicle, that is, a transmission-side vehicle by means of a latitude and a longitude.

Accordingly, a reception-side vehicle receiving the between-vehicles communication information is able to identify the traveling position of the transmission-side vehicle by referring to the map information recorded in the navigation device 100 that is included in the reception-side vehicle.

An item number 20 shows a region that the application is able to arbitrarily use. In the present embodiment, to receive and transmit information that the navigation device 100 receives and transmits between vehicles to perform various kinds of warning operations, for example, information related to a driver, accident information in the past and the like, the region shown by this item number 20 is used. Here, the between-vehicles communication system used by the navigation device according to the present invention is not limited to the wireless communication system that uses the radio wave on the order of 700 MHz, and is suitably modifiable within the scope that does not depart from the spirit of the present invention. For example, a wireless communication system, which uses a frequency band of 24 GHz or higher such as a frequency band of 5 GHz and the like, for example, may be used.

### <1-4. Notification process>

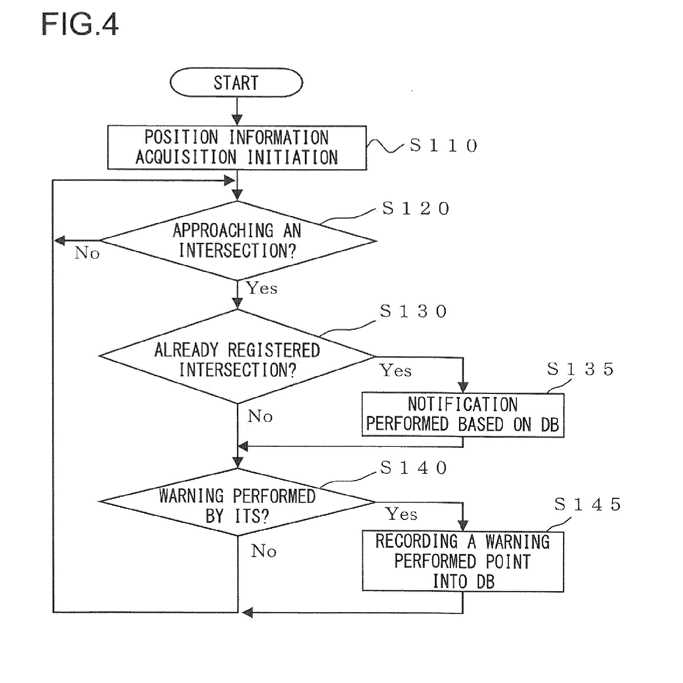

Here, an overview of a notification process performed by the navigation device 100 according to the first embodiment of the present invention is described using a flow chart in Fig. 4. The flow chart shown in Fig. 4 is started at a time the navigation device 100 goes into an operation state. Here, the flow chart shown in Fig. 4 is a process flow based on the assumption that each vehicle is traveling obeying the Road Traffic Law in Japan.

After starting of the present process, the position information acquisition portion 11a, in a step S110, starts a position information acquisition process to perform acquisition of position information at predetermined periods of 100 milliseconds, for example. Here, the position information acquisition is performed using the GPS antenna 12 and the positioning navigation device 13.

Next, the point detection portion 11d, in a step S120, determines whether or not a position indicated by the position information acquired by the position information acquisition portion 11a is within a predetermined area from an intersection, for example, within 300 meters. Specifically, for example, the point detection portion 11d reads out the map information recorded in the memory 18 and calculates the distance between both points by comparing the latitude and longitude of the intersection indicated by the map information with the latitude and longitude indicated by the position information.

In a case where the position indicated by the position information is not within the predetermined area, the process goes to the step S120 again to continue the position information acquisition and the monitoring of the distance to the intersection. In a case where the position indicated by the position information is within the predetermined area, the point detection portion 11d, in a step S130, determines whether or not the intersection present within the predetermined area is an intersection which is registered beforehand in a DB (Data Base) by the warning history generation portion 11c, that is, an intersection indicated by warning history information (described later).

Here, the DB may be recorded in the memory 18 or may be recorded in an information process device (not shown) which is able to communicate with the communication control portion 20.

In a case where the intersection present within the predetermined area is not the intersection registered in the DB, the process goes to a step S140 described later. In a case where the intersection present within the predetermined area is the intersection registered in the DB, the notification portion 11e, in a step S135, reads out warning history information related to this intersection from the DB. And, the notification portion 11e performs a notification about content of the read warning history information. In other words, the notification portion 11e regards the intersection as a point where a warning was performed in the past and performs a notification about a precaution that indicates content of the warning in the past.

Specifically, for example, the notification portion 11e generates, from the read warning history information, a voice signal that includes a predetermined notification voice (= notification information). And, the notification portion 11e gives the generated voice signal to the speaker 17 to perform output control. In this way, the notification voice is output. Or, the notification portion 11e generates, from the read warning history information, an image signal that includes a predetermined notification image (= notification information). And, the notification portion 11e gives the generated image signal to the display control portion 15 to perform output control. In this way, the notification image is output. After completion of the notification, the process goes to a step S140.

Next, the warning history generation portion 11c, in the step S140, determines whether or not performance of a warning operation by the warning operation portion 11b is detected. Here, in the warning operation by the warning operation portion 11b, for example, an ITS is used to perform between-vehicles communication or between-road-and-vehicle communication, and an approaching vehicle and a dangerous point are detected. And, based on this detection result, output control of an alarm sound and the like is performed using the speaker 17 to fulfill a warning. Here, because details of the warning operation are the same as those by a conventional technology, description of them is skipped.

In a case where performance of a warning operation is not detected, the process goes to the step S120 again. In a case where performance of a warning operation is detected, the warning history generation portion 11c, in a step S145, acquires, from the position information acquisition portion 11a, position information that indicates a point where the warning operation was performed,

Further, the warning history generation portion 11c generates warning history information that relates the acquired position information to information that indicates content of the warning operation, and records the warning history information into the DB. In this way, the intersection where the warning occurred is registered into the DB.

For example, if a warning about a sudden collision at an intersection, a pedestrian hitting accident at an intersection, a collision at a turning-right time or the like is released, the point and the kind of the warning are recorded into the memory 18. After completion of the recording, the process goes to the step S120 again. In the meantime, the warning history information recorded here is referred to in the above step S130 and step S135.

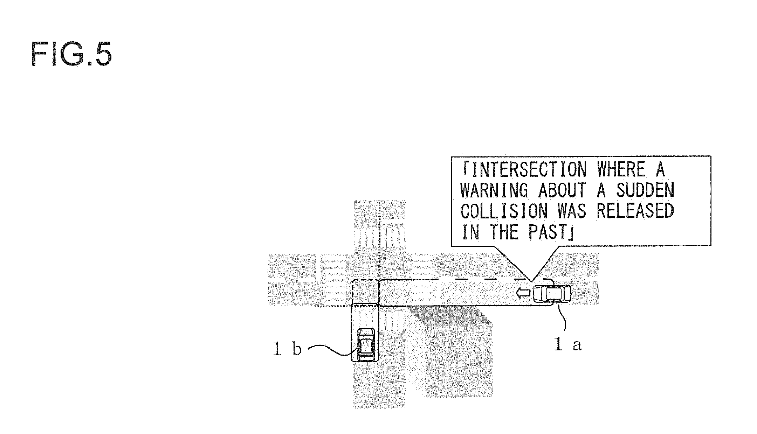

A notification example performed by the process described above is explained using Fig. 5. Fig. 5 shows an example in which there is an intersection in front of a vehicle 1a and there is another vehicle 1b near the intersection. It is assumed that this intersection is an intersection where the vehicle 1a caused a collision accident in the past and a warning occurred, that is, an intersection indicated by the warning history information in the DB.

In this case, if the own-vehicle 1a approaches this intersection, for example, a notification having content "this is an intersection where a warning about a sudden collision was released in the past" is performed. In this way, the driver is urged to take caution in advance.

According to the embodiment described above, a point where a warning about a danger is performed is recorded into the DB, and in a case where the vehicle 1a approaches the same point, a notification is performed in advance. In this way, it is possible to transmit the experienced information which a driver encountered in the past to the driver in accordance with a traveling route.

Besides, in a case where the driver is a driver different from the driver at the accident time, for example, in a case where a family member, a rental car user or the like is driving, it is possible to share the danger information which other drivers encountered in the past, and it is possible to reduce a likelihood of an accident happening. Besides, it is unnecessary to manually collect the past warning information and manage the past warning information by means of the DB, so that it is advantageous in terms of the use.

### [Embodiment 2]

### <2-1. Structure of between-vehicles communication system>

Because this is the same as the embodiment 1, description is skipped.

### <2-2. Structure of navigation device>

Because this is the same as the embodiment 1, description is skipped.

### <2-3. Between-vehicles communication information>

Because this is the same as the embodiment 1, description is skipped.

### <2-4. Notification process>

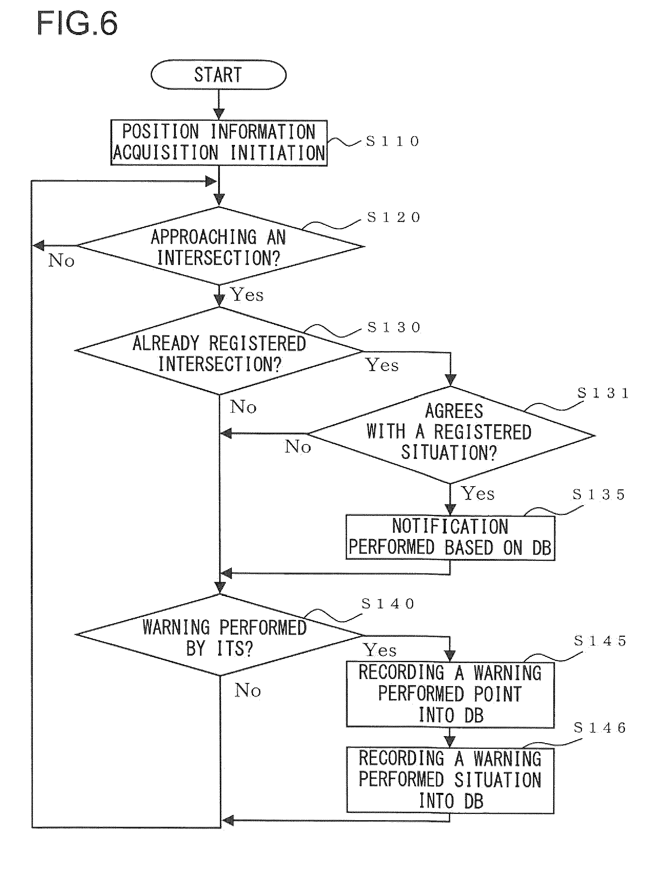

Here, an overview of a notification process performed by the navigation device 100 according to a second embodiment of the present invention is described using a flow chart in Fig. 6. The flow chart shown in Fig. 6 is started at a time the navigation device 100 goes into an operation state. Here, processes that are the same as those in Fig. 4 for the embodiment 1 are indicated by the same step numbers and description is skipped.

In the present embodiment, after performance of the step S110 to the step S120, if it is determined in the step S130 that the intersection present within the predetermined area is an intersection which is already registered in the DB, the process goes to a step S131. The point detection portion 11d, in the step S131, reads out, from the warning history information registered in the DB, the warning history information related to this intersection. And, the point detection portion 11d compares warning situation information included in the warning history information with the current traveling situation.

Here, the warning situation information is information that is included into the warning history information by the warning history generation portion 11c and recorded. The warning situation information includes information that indicates a situation where a warning was performed in the past, for example, an entrance angle to an intersection, an entrance speed to the intersection, approach situations of other vehicles and the like.

The point detection portion 11d compares these pieces of warning situation information with the current traveling situation. Here, the current traveling situation is acquired by using, for example, a gyrosensor and a vehicle speed sensor that are included in the positioning navigation device 13 or by the communication control portion 20 that uses the ITS.

In a case where the comparison result meets a predetermined condition, for example, in a case where a difference between the entrance speeds in both situations is under 10 percent, or in a case where a difference between the entrance angles is within + 45° , the process goes to the step S135 to perform a notification.

Specifically, for example, the notification portion 11e, like in the embodiment 1, generates a voice signal that includes a notification voice or an image signal that includes a notification image. And, the notification portion 11e gives the generated voice signal or image signal to the speaker 17 or the display control portion 15 to perform output control. In this way, the notification voice or notification image is output. After completion of the notification, the process goes to the step S140. In a case where the comparison result does not meet the predetermined condition, that is, in a case where both situations are remarkably different from each other, the process goes to the step S140 without performing a notification.

Next, in a case where performance of a warning by the warning operation portion 11b is detected in the step S140, the warning performed point is recorded into the DB in the step S145; thereafter, the process goes to the step S146. The warning history generation portion 11c, in the step S146, includes a warning performance situation into the warning history information and records the warning performance situation into the DB.

In other words, as described above, an entrance angle to an intersection at a time of performing a warning, an entrance speed to the intersection, approach situations of other vehicles and the like are included into the warning history information and recorded. After completion of the recording, the process goes to the step S120 again.

According to the embodiment described above, a point where a warning about a danger is performed is recorded into the DB; in a case where the vehicle 1 approaches the same point again, a notification is not always performed, but performed in a case only where the situation is similar to the situation where the previous warning was performed. Because of this, it is possible to perform a notification only that has a high necessity in accordance with a traveling situation of the vehicle. In this way, it is possible to avoid a low-necessity notification frequently occurring and discouraging the driving.

### [Other embodiments]

Hereinbefore, the present invention is described using the preferred embodiments and examples; however, the present invention is not limited to the above embodiments, and is variously modifiable and able to be put into practical use within the scope of the technological concept.

Accordingly, the present invention is applicable to embodiments described below.

(A) In the above embodiments, each kind of function portion of the navigation device 100 according to the present invention involved in each kind of process is achieved by executing the predetermined program on the processing device such as a microprocessor and the like; however, an embodiment may be employed, in which each kind of function portion is achieved by a plurality of circuits.

(B) In the above embodiments, the example, in which the GPS device is housed in the inside of the navigation device 100, is described; however, the same housing may not be necessarily used. For example, an embodiment may be employed, in which the navigation device 100 and the GPS device each have a communication portion, and the same operation as the above operation is performed by transferring information via the communication portions.

(C) In the above embodiments, it is determined that the traveling situations agree with each other in the case where the traveling speeds or the traveling directions are approximate to each other; however, the determination may be performed with other elements included in the traveling situation. For example, an embodiment may be employed, in which for example, the time, the weather, the temperature, the number of passengers at the traveling time, the total traveling time and the like are acquired using a sensor and a communication network that are not shown, and these are included into the traveling situation.

(D) In the above embodiments, the example is described, in which the warning is performed using the ITS, and an intersection is used as an example of the other point that is recorded into the DB; however, an embodiment may be employed, in which the warning is performed, the warning history information is generated, and the advance notification is performed on a road which has a shape other than an intersection. For example, an embodiment may be employed, in which a junction of a trifurcate road, a steep road, a road under repair or the like is used.

### Reference Signs List

- 1: vehicle
- 2: GPS satellite
- 100: navigation device
- 11: control portion
- 11a: position information acquisition portion
- 11b: warning operation portion
- 11c: warning history generation portion
- 11d: point detection portion
- 11e: notification portion
- 12: GPS antenna (GPS device)
- 13: positioning navigation device (GPS device)
- 14: LCD (display portion)
- 15: display control portion
- 16: operation portion
- 17: speaker (voice output portion)
- 18: memory (record portion)
- 19: antenna (wireless communication portion)
- 20: communication control portion (wireless communication portion)

## Claims

1. A navigation device including:
a wireless communication portion that performs wireless communication by using an antenna;
a GPS device that performs communication with a GPS (Global Positioning System) satellite;
a position information acquisition portion that acquires position information by using the GPS device;
a display portion or a voice output portion;
a warning operation portion that performs a warning operation by means of the display portion or the voice output portion based on information obtained from between-vehicles communication or between-road-and-vehicle communication by the wireless communication portion; and
a record portion that records map information;
the navigation device comprising:
a warning history generation portion that in a case where the warning operation is performed by the warning operation portion, obtains, from the position information, acquisition portion, point information indicating a point where the warning operation is performed, generates warning history information which relates content of the warning operation and the point information to each other, and records the warning history information into the record portion;
a point detection portion that determines whether or not a position indicated by the position information obtained from the position information acquisition portion is in a predetermined area from an intersection indicated by the map information, and determines whether or not the position indicated by the position information is in a predetermined area from a position indicated by the point information which is included in the warning history information; and
a notification portion that in a case where it is determined by the point detection portion that the position indicated by the position information is in the predetermined area, generates notification information that indicates content of the warning history information which includes the point information, and based on the notification information, controls the display portion or the voice output portion to perform a notification operation.

2. The navigation device according to claim 1, wherein
in a case where the warning operation is performed by the warning operation portion, the warning history generation portion includes situation information, which indicates a traveling situation of a vehicle on which the navigation device is mounted, into the warning history information and records the situation information into the record portion;
the point detection portion determines whether or not the position indicated by the position information acquired by the position information acquisition portion is in a predetermined area from the intersection indicated by the map information and from the position indicated by the point information which is included in the warning history information, and determines whether or not the traveling situation of the vehicle agrees with the traveling situation indicated by the situation information; and
in a case where it is determined by the point detection portion that the position indicated by the position information acquired by the position information acquisition portion is in the predetermined area and the traveling situations agree with each other, the notification portion generates the notification information which indicates the content of the warning history information which includes the situation information, and based on the notification information, controls the display portion or the voice output portion to perform the notification operation.

3. The navigation device according to claim 2, further comprising a speed detection portion or an angle detection portion, wherein
in the case where the warning operation is performed by the warning operation portion, the warning history generation portion detects, from the speed detection portion, a traveling speed of the vehicle on which the navigation device is mounted, or detects, from the angle detection portion, a traveling direction of the vehicle, and generates the situation information based on the detected traveling speed or the detected traveling direction;
the point detection portion uses the speed detection portion or the angle detection portion to compare the raveling speed or the traveling direction of the vehicle with the traveling speed or the traveling direction indicated by the situation information, and determines whether or not a comparison result meets a predetermined condition; and
in a case where it is determined by the point detection portion that the position indicated by the position information acquired by the position information acquisition portion is in the predetermined area and the comparison result meets the predetermined condition, the notification portion generates the notification information which indicates the content of the warning history information which includes the situation information, and based on the notification information, controls the display portion or the voice output portion to perform the notification operation.

4. The navigation device according to claim 2, wherein
in the case where the warning operation is performed by the warning operation portion, the warning history generation portion uses an ITS (Intelligent Transportation System) to detect the number or types of vehicles around the vehicle on which the navigation device is mounted, and based on the detected number or types, generates the situation information;
the point detection portion uses the ITS to compare the number or types of peripheral vehicles of the vehicle with the number or types of vehicles around indicated by the situation information, and determines whether or not a comparison result meets a predetermined condition;
in a case where it is determined by the point detection portion that the position indicated by the position information obtained from the position information acquisition portion is in the predetermined area and the comparison result meets the predetermined condition, the notification portion generates the notification information which indicates the content of the warning history information which includes the situation information, and based on the notification information, controls the display portion or the voice output portion to perform the notification operation.

5. The navigation device according to claim 1, wherein
the warning operation portion uses an ITS to perform the between-vehicles communication or the between-road-and-vehicle communication, thereby performing the warning operation; and
the warning history generation portion generates the warning history information by relating the point information, acquired by the position information acquisition portion to information which indicates the content of the warning operation that is performed by using the ITS,
